# EUROPEAN PATENT APPLICATION

(11) **EP 2 930 041 A1**
(43) Date of publication of application: **14.10.2015**
(21) Application number: 14305507.7
(22) Date of filing: 07.04.2014
(51) Int. Cl.: B60K 6/46, B60K 6/383, B60K 6/10, B60W 20/00, B60W 10/02, B60W 10/06, B60W 10/08, B60L 11/12

(54) **Powertrain assembly, range extender, vehicle, and method of operating the vehicle**

(71) Applicant: Aktiebolaget SKF, 415 50 Göteborg (SE)
(72) Inventor: Descombes, Michel, 78000 Versailles (FR)
(74) Representative: Kohl, Thomas

(57) **Abstract**

The invention relates to a powertrain assembly for creating a torque transmission path between an internal combustion engine (14) and a rotor (16a) of a reversible electric machine (16) and to a vehicle comprising such a powertrain assembly.

It is proposed to provide the powertrain assembly with a freewheel (18) in said torque transmission path.

## Description

The invention relates to powertrain assemblies creating a torque transmission path between an internal combustion engine and a rotor of a reversible electric machine.

Power train assemblies of this type are frequently used in the field of range-extenders for vehicles comprising electrical traction motors. The internal combustion engine of the range extender assembly can be used to drive the reversible electric machine acting as a generator in order to produce additional electric energy for driving the traction motor in the event that the initially stored electric energy stored in the battery of the vehicle is used up.

In known range-extender assemblies, the torque transmission from the crankshaft of the internal combustion engine to the rotor is effected by a splined shaft end engaging with a corresponding hollow-splined shaft. This solution leads to various problems. Firstly, non-perfect coaxiality between the splined shafts leads to wear and induces unknown loads towards the rolling bearings and the crankshaft sliding bushings of the internal combustion engine. Further, the fixed connection may lead to drag losses in the pistons, rods, valve-trains of the internal combustion engine etc. when the vehicle speed is decreasing in case the range-extender system (it means one internal combustion engine and its associated electric generator) would have additional function to convert vehicle mechanical energy into electrical energy, in order to recover braking energy. The energy recovery would require specific engine valves timing command systems, which may reduce the drag losses. However, sliding forces from engine pistons into cylinder, valves into their guides and valves seals, as well as friction torques from rotary crankshaft, camshaft(s), balancing shaft(s) and from crankshaft driven alternator, air conditioning compressor, water-pump, hydraulic steering pump, all unavoidable, if internal combustion engine is not dis-clutched or free-wheeled from vehicle wheels, during each vehicle decelerations.

On the other hand, it is necessary to diligently control the charging and un-charging cycles of the modern batteries in order to avoid damages or reductions of the life time. In particular, the high energy amounts generated during short-time regenerative vehicle braking operations cannot be efficiently charged in modern batteries without damaging them. As a consequence, it is necessary to provide a "buffer" other than the main batteries in order to store the braking energy.

It is known to use super-capacitors or kinetic energy recovery systems (KERS) for this purpose. Electrical KERS systems transform the kinetic energy to be recovered into electrical energy using a generator and dedicated accumulators with short reaction time, whereas mechanical KERS systems use mechanical flywheels storing the braking energy to be recovered as kinetic energy.

Both solutions require additional energy storing means which are expensive, susceptible to internal damages and consuming space and weight on-board vehicles. Mechanical and electrical KERS may generate people injuries if given failures at highspeed, depending from their very high speed rotor geometry and material as well as from its container wall thickness design.

The invention proposes to solve this problem by using a power train assembly according to claim 1, and a vehicle comprising such a power train assembly. Further embodiments of the invention are defined in the dependent claims.

The invention starts from a power train assembly for creating a torque transmission path between an internal combustion engine and a rotor of a reversible combustion engine, in particular between an internal combustion engine and a reversible electric machine in a range-extender.

It is proposed to provide a in the torque transmission path between the internal combustion engine and the reversible electric machine.

The freewheel has the advantage that the rotor of the reversible electric machine can rotate and can be driven independent from the internal combustion engine so as to store kinetic rotation energy without drag losses in the internal combustion engine, wherein the kinetic rotation is stored, and the rotating rotor of the reversible electric machine can be immediately transformed into electrical energy using a suitable commutation control of the rotor and stator of the reversible electric machine. Further, expansive splines connections can be dispensed with, the energy management in electric vehicles can be improved, in particular in the ability to store high energy flows on short time scales when the vehicle is braking, expensive super-capacitors can be dispensed with and the total energy storage capacity can be increased. The range-extender rotor can be accelerated to much higher rotational speeds as compared to the case where it is permanently mechanically connected to the internal combustion engine driving it. Internal combustion engine acyclisms including torque peak-loads can be filtered using the free-wheel.

In a further embodiment of the invention, it is proposed that the free-wheel comprises inner and outer raceways, wherein at least one of these raceways is arranged directly on a crankshaft of the internal combustion engine.

In addition to this or as an alternative, at least one of the raceways is arranged directly on the rotor shaft of the reversible electric machine. This configuration enables a simple and cost-saving design, avoids additional parts and ensures a direct torque transmission. However, it is possible, to provide an intermediate hub-like part, centered and bolted at the crankshaft-end in order to provide a free-wheel support or raceway.

A compact design can be achieved when the free-wheel is arranged between two shaft parts, wherein one of the shaft parts is inserted into a hollow end portion of the other one of the shaft parts.

In a preferable embodiment of the invention, the free-wheel is formed as a sprag clutch. Alternative embodiments include freewheels using cylindrical rollers, flat radial blades or pawls acting on teeth etc.

Further, it is proposed to provide the power train assembly with means for locking the freewheel. This enables torque transmission from the reversible electric machine to the internal combustion engine in both rotation directions, e.g. in order to enable the reversible electric machine to start the internal combustion engine, i.e. when main batteries of the vehicle are discharged up to a preset threshold level and therefore need to be re-charged.

Alternatively or in addition to this, the power train assembly could be provided with an engageable or dis-engageable clutch provided parallel to the free-wheel in the torque transmission path.

A further aspect of the invention relates to a vehicle comprising an electrical traction motor, an internal combustion engine and a reversible electric machine and a main electrical energy storage means, such as a battery, for storing electrical energy for driving the electrical traction motor and the reversible electric machine. The reversible electric machine is preferably provided in addition to the traction motor. It is proposed that the internal combustion engine and the reversible electric machine are connected by a torque transmission path created by the power train assembly as described above.

In a preferable embodiment of the vehicle according to the invention, the vehicle further comprises a control unit for controlling the operation of the electrical traction motor and the reversible electric machine, e.g. using a commutation control for the respective rotor and stator currents.

It is proposed that the control unit is configured to operate in at least one assisted acceleration mode. In the assisted acceleration mode, the control unit transforms kinetic rotation energy stored in the rotor of the reversible electric machine into electric energy and delivers this electric energy to the electric traction motor in addition or as a substitution for the electric energy supplied by the main electrical energy storage means. Accordingly, additional traction power can be provided on short time scales without overloading the main electrical energy storage means, i.e. the battery, the electro-chemical reaction of which imposes limits on the reaction times and on the maximum electrical current.

Further, it is proposed that the control unit is configured to operate in at least one driven motor mode. In the driven motor mode, the control unit accelerates the rotor of the reversible electric machine using electrical energy of the main electrical energy storage means. The acceleration corresponds to an increase of the kinetic flywheel energy stored in the rotor-kinetic-free motion and this energy can be delivered in addition or as a substitution of the electrical energy supplied by the main electrical energy storage means on a short time scale to the electrical traction motor if needed.

A further aspect of the invention relates to a method for operating a vehicle as described above, wherein the kinetic rotation energy stored in the rotor of the reversible electric machine is transformed into electrical energy and this electrical energy is delivered to the electrical traction motor in addition or as a substitution for the electrical energy supplied by the main electrical energy storage means at least for the assisted acceleration mode.

Further, it is proposed that the method includes an acceleration of the reversible electric machine using the electrical energy of the main electrical energy storage means, at least in the driven motor mode.

The above description of the invention as well as the appended claims, figures and the following description of preferred embodiments show multiple characterizing features of the invention in specific combinations. The person skilled in the art will easily be able to consider further combinations or sub-combinations of these features in order to adapt the invention as defined in the claims to his/her specific needs.
- Fig. 1: is a schematic view of a vehicle comprising a powertrain assembly according to a first embodiment of the invention.
- Fig. 2: is a sectional view of a portion of a torque transmission path of the powertrain assembly according to the first embodiment of invention including a freewheel.
- Fig. 3a: is a graph schematically showing the rotation speeds and stored energies of two shaft parts of the torque transmission path according to the first embodiment of invention in a driven motor mode.
- Fig. 3b: is a graph schematically showing the rotation speeds and stored energies of two shaft parts of the torque transmission path according to the first embodiment of invention in assisted acceleration mode.
- Fig. 4: is a schematic view of a vehicle according to the invention a second embodiment of the invention including locking means for the free-wheel.
- Fig. 5: is a schematic view of a vehicle according to the invention a third embodiment of the invention including a clutch connected in parallel to the free-wheel.

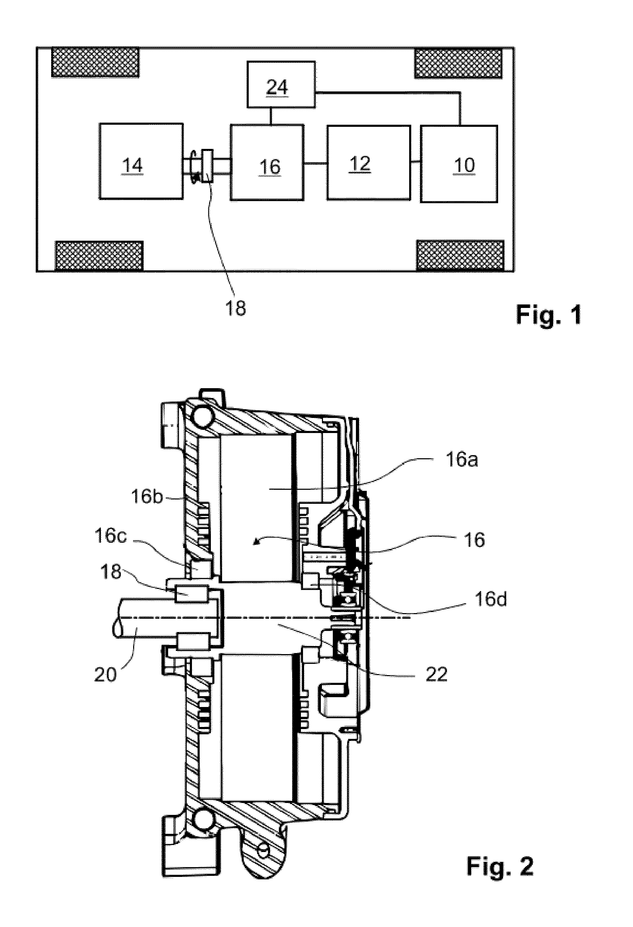

Fig. 1 is a schematic view of a vehicle comprising a powertrain assembly according to a first embodiment of the invention.

The vehicle is a vehicle having electric traction motor 10 powered by accumulators forming a main electrical energy storage means 12 for storing electrical energy for driving the electrical traction motor 10 and with a range extender assembly.

The range extender assembly comprises an internal combustion engine 14 and a reversible electric machine 16, wherein the internal combustion engine 14 and the reversible electric machine 16 are connected by a torque transmission path created by a power train assembly comprising a free-wheel 18 mounted in the torque transmission path.

Fig. 2 is a sectional view of a portion of the torque transmission path of the powertrain assembly according to the first embodiment of invention including the free-wheel 18.

The reversible electric machine 16 comprises a rotor 16a in a housing 16b provided with stator windings. The rotor 16a is held on a rotor shaft 22 supported in the housing 16b by suitable bearings 16c, 16d.

The free-wheel 18 comprises inner and outer raceways, wherein the inner raceway is fitted directly on a crankshaft 20 of the internal combustion engine 14 and the outer raceway is directly connected to the rotor shaft 22 of the reversible electric machine 16.

The end of the crankshaft 20 and the rotor shaft 22 constitute two shaft parts in the power transmission path of the range extender assembly and the free-wheel 18 is arranged between these two shaft parts 20, 22, wherein the end part of the crankshaft 20 is inserted into a hollow end portion of the rotor shaft 22. In a preferred embodiment of the invention, the freewheel 18 is formed as a sprag clutch.

The vehicle further comprises a control unit 24 for controlling the operation of the electrical traction motor 10 and the reversible electric machine 16. The control unit 24 comprises a microcontroller generating driving signals for commuting the currents on the stator and rotor coils of the electric machines 10, 16, wherein power switching circuits are provided in the machines 10, 16 themselves.

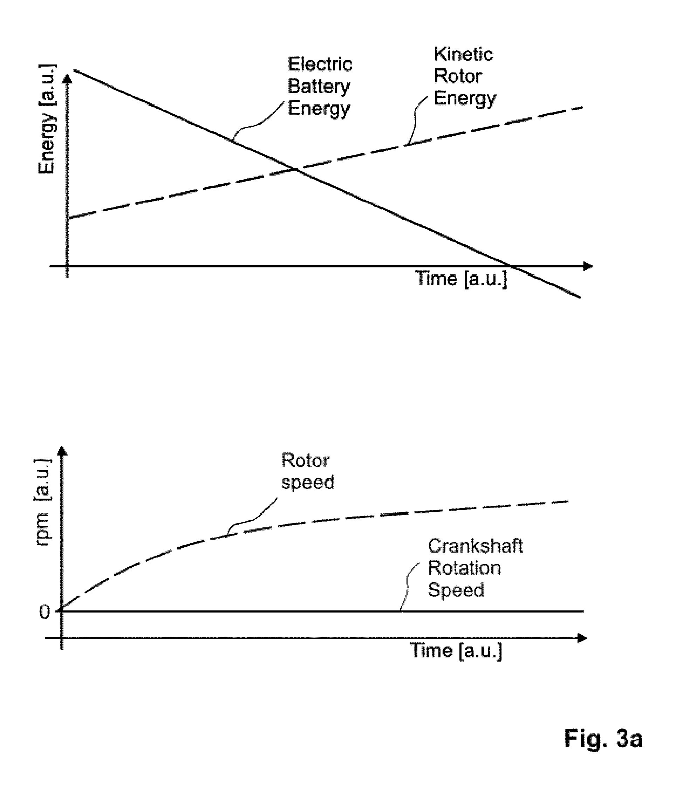

Due to suitable software implemented in the microcontroller or the computer of the control unit 24, the control unit 24 is configured to operate in various operation modes. Fig. 3a is a graph schematically showing the rotation speeds and stored energies of two shaft parts 22, 22 of the torque transmission path according to the first embodiment of invention in a driven motor mode.

In a method for operating the reversible electric machine corresponding to the driven motor mode implemented in the control unit 24, the rotor 16a of the reversible electric machine 16 is accelerated using electrical energy of the main electrical energy storage means 12. As a consequence, the kinetic energy stored in the rotating rotor 16a of the reversible electric machine 16 increases, while the energy stored in the battery 12 decreases correspondingly. The rotor 16a is used as a means for storing kinetic energy 12 and the driven motor mode corresponds to a mode where this energy storage is charged.

Further, the operation modes include at least one assisted acceleration mode, wherein the control unit transforms kinetic rotation energy stored in the rotor 16a of the reversible electric machine 16 into electric energy and delivers this electric energy to the electric traction motor 10 in addition to or as a substitution for the electric energy supplied by the main electrical energy storage means 12.

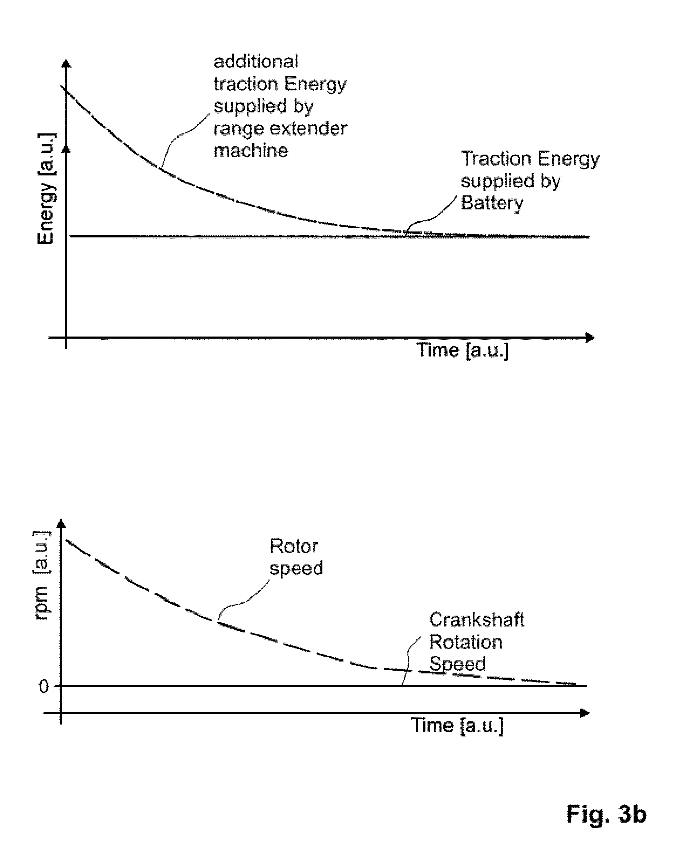

Fig. 3b is a graph schematically showing the rotation speeds and stored energies of two shaft parts 20, 22 of the torque transmission path according to the first embodiment of the invention in the assisted acceleration mode.

In the assisted acceleration mode, kinetic rotation energy stored in the rotor 16a of the reversible electric machine 16 is transformed into electric energy and this electric energy is delivered to the electric traction motor 10 in addition to or as a substitution of the electric energy supplied by the main electrical energy storage means 12.

Further, a braking energy recovery mode is available, wherein braking energy is transformed into electric energy by the electric traction motor 10 acting as a generator and the electric braking energy is directly used to accelerate the rotor 16a of the reversible electric machine 16.

Reversible electric machine 16 rotor speed is controlled and limited by control unit (24), using factory and vehicles applications adjustable maximum speed value. This design feature avoids any rotor damage and secures its running conditions, without heavy and thick container installation around reversible electric machine (16), as installed eg on a KERS.

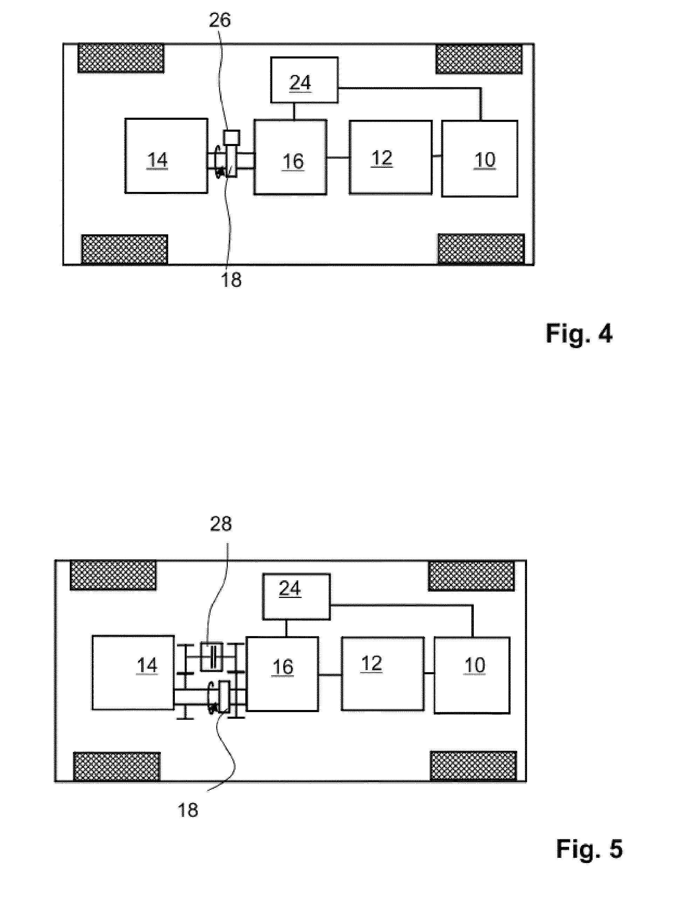

Fig. 4 is a schematic view of a vehicle according to the invention a second embodiment of the invention including locking means 26 for the freewheel 18. The locking of the free-wheel 18 enables torque transmissions in both rotation directions.

In this embodiment, the control unit 24 may be equipped with software enabling driving the reversible electric machine 16 in order to start the internal combustion engine 14 of the range extender such that any additional starting system connected to the internal combustion engine 14 with a belt, can be dispensed with.
This construction with lockable-on-demand free-wheel installed between internal combustion engine 14 and reversible electric machine 16 saves mass and cost of any additional system to start internal combustion engine 14. For example below additional systems will be eliminated: one starter gear-motor with moveable starter-pinion and its one way clutch, to be electro-mechanically geared then un-geared on demand onto internal combustion engine 14 dedicated large diameter ring gear, or one electric starter-machine with one permanently meshed gear-set driving crankshaft through one one-way-clutch (as to start most of motor-cycles internal combustion engines), or one electric starter machine driving engine 14 crankshaft via one belt or alternatively via one chain or other transmission solutions.
In case free-wheel between internal combustion engine 14 and reversible electric machine 16 would be provided without lockable technology, then one of above described main starting systems would be installed to start internal combustion engine 14, automatically when battery condition requires, and managed by control unit 24.

Fig. 5 is a schematic view of a vehicle according a third embodiment of the invention including an engageable and disengageable clutch 28 connected parallel to the freewheel 18. In the disengaged configuration, the rotor 16a of the reversible electric machine 16 can be used as energy storage means as described above. In the engaged configuration, the reversible electric machine 16 can be used as starting electric machine to start rotary motion and then self ignition of the internal combustion engine 14 of the range extender.

## Claims

1. Powertrain assembly for creating a torque transmission path between an internal combustion engine (14) and a rotor (16a) of a reversible electric machine (16),
**characterized by**
comprising a free-wheel (18) in said torque transmission path.

2. Powertrain assembly according to claim 1,
**characterized in that** the free-wheel (18) comprises inner and outer raceways, wherein at least one of said raceways is arranged directly on a crankshaft (20) of the internal combustion engine (14).

3. Powertrain assembly according to claim 1 or 2,
**characterized in that** the free-wheel (18) comprises inner and outer raceways, wherein at least one of said raceways is arranged directly on a rotor shaft (22) of the reversible electric machine (16).

4. Powertrain assembly according to one of the preceding claims,
wherein the free-wheel (18) is arranged between two shaft parts (20, 22), wherein one of the shaft parts (20) is inserted into a hollow end portion of the other one of the shaft parts (22).

5. Powertrain assembly according to one of the preceding claims,
wherein the free-wheel (18) is formed as a sprag clutch, or alternatively by any other one way clutch mechanisms.

6. Powertrain assembly according to one of the preceding claims,
further comprising means (26) for locking the free-wheel (18).

7. Powertrain assembly according to one of the preceding claims,
further comprising an engageable and disengageable clutch (28) in parallel to the free-wheel (18).

8. Range extender including an internal combustion engine (14), a reversible electric machine (16) and a power train assembly according to one of the preceding claims.

9. Vehicle comprising an electrical traction motor (10), an internal combustion engine (14), a reversible electric machine (16) and a main electrical energy storage means (12) for storing electrical energy for driving the electrical traction motor (10) and the reversible electric machine (16), wherein the internal combustion engine (14) and the reversible electric machine (16) are connected by a torque transmission path created by the powertrain assembly according to one of claims 1-7.

10. Vehicle according to claim 9,
further comprising a control unit (24) for controlling the operation of at least the electrical traction motor (10) and the reversible electric machine (16), wherein the control unit (24) is configured to operate in at least one assisted acceleration mode, wherein the control unit (24) transforms kinetic rotation energy stored in the rotor (16a) of the reversible electric machine (16) into electric energy and delivers this electric energy to the electric traction motor (10) in addition to or as a substitution for the electric energy supplied by the main electrical energy storage means (12).

11. Vehicle according to claim 9 or 10,
further comprising a control unit (24) for controlling the operation of the electrical traction motor (10) and the reversible electric machine (16), wherein the control unit (24) is configured to operate in at least one driven motor mode, wherein the control unit (24) accelerates the rotor (16a) of the reversible electric machine (16) using electrical energy of the main electrical energy storage means (12).

12. Vehicle according to one of claims 9 to 11,
further comprising a control unit (24) for controlling the operation of the electrical traction motor (10) and the reversible electric machine (16), wherein the control unit (24) is configured to operate in at least one braking energy recovery mode, wherein the control unit (24) controls the electric traction motor (10) so as to work as a generator and to transform braking energy into electric braking energy and to accelerate the rotor (16a) of the reversible electric machine (16) using electric braking energy.

13. Method for operating a vehicle according to one of claims 9 - 12, wherein kinetic rotation energy stored in the rotor (16a) of the reversible electric machine (16) is transformed into electric energy and this electric energy is delivered to the electric traction motor (10) in addition to or as a substitution of the electric energy supplied by the main electrical energy storage means (12) in at least one assisted acceleration mode.

14. Method according to claim 13, wherein the rotor (16a) of the reversible electric machine (16) is accelerated using electrical energy of the main electrical energy storage means (12) in at least one driven motor mode.
